# EUROPEAN PATENT APPLICATION

(11) **EP 3 182 545 A1**
(43) Date of publication of application: **21.06.2017**
(21) Application number: 15200163.2
(22) Date of filing: 15.12.2015
(51) Int. Cl.: H02J 3/00, H02J 3/38, G06Q 30/00

(54) **METHOD FOR FORECASTING THE POWER DAILY GENERABLE BY A SOLAR INVERTER**

(71) Applicant: ABB Schweiz AG, 5400 Baden (CH)
(72) Inventor: Vernia, Filippo, 19121 La Spezia (SP) (IT); Koutifaris, Andrea, 50141 Firenze (IT); Bistoni, Fabio, 06132 San Martino in Colle (PG) (IT); Polverini, Luca, 52100 Arezzo (AR) (IT)
(74) Representative: De Santis, Giovanni

(57) **Abstract**

A method for forecasting the power generable by a solar inverter during a current day, comprising:
a) collecting sunrise measurements related to the power generated by the inverter during at least a staring period of the sunrise of one or more days comprising the current day; and
b) performing modelling techniques based on the sunrise measurements of at least one of the one or more days, for determining a forecasting model which fits the sunrise measurements and predicts the power generable by the inverter during the rest of the current day.

## Description

The present invention relates to a method for forecasting the power daily generable by a solar invert, and to inverters and power generation systems comprising means adapted to perform this method.

As known, solar inverters are power electronic devices which can be used in solar power generation plants for performing power conversion of DC power received by one or more solar panels into AC power. The generated AC power can be consumed by the users of the solar inverter, for feeding one or more AC loads, such as domestic, residential or industrial utilities.

To produce an extra AC power with respect to the needs of the users should not be an economical solution; for example, in some countries the selling option of the produced extra power to the network providers is not or it should become no more available or economical.

Hence, at least in certain circumstances, there is the need for the users of maximizing the self-consumption of the AC power generated by the solar inverts, in such a way to avoid, or at least limit, an uneconomic production of extra power.

Forecasting of the AC power generable by a solar inverter is an important task for optimizing the self-consumption.

Indeed, the user can schedule his self-consumption of AC power in view of the forecasted generable AC power. For example, the user can schedule the use of his AC utilities or loads in such a way to consume more AC power when the forecasted power generation is at a peak.

In this way, all the generated AC power, or at least the larger part thereof, will be self-consumed by the user.

According to known solutions, the AC power daily generable by a solar inverter is forecasted by means of averaging calculations on historical data.

For example, the AC power daily generable can be predicted by making an average of the power produced in the previous year.

In this way, the calculation is performed on many data; further, this calculation cannot promptly react if the weather conditions of the day under monitoring are very different from the weather conditions under which the historical data were collected. Indeed, in this case the accuracy of the forecasting results could be jeopardized by averaging the current data with the historical data. Although this known forecasting solutions perform in a rather satisfying way, there is still reason and desire for further improvements in forecasting the power daily generable and, hence, in the optimization of the power self-consumption.

Such desire is fulfilled by a method for forecasting the power generable by a solar inverter during a current day, comprising:
a) collecting at least sunrise measurements related to the power generated by the inverter during at least a staring period of the sunrise of one or more days comprising the current day; and
b) performing modelling techniques based on the sunrise measurements of at least one of the one or more days, for determining a forecasting model which fits the sunrise measurements and predicts the power generable by the inverter during the rest of the current day.

Another aspect of the present disclosure is to provide an inverter comprising processing means and program code which can be executed by the processing means. The program code is adapted, when executed by said processing means, to cause an execution of the method defined by the annexed claims and disclosed in the following description.

Another aspect of the present disclosure is to provide a power generation system comprising at least one solar inverter, processing means and program code which can be executed by the processing means. The program code is adapted, when executed by said computing means, to cause an execution of the method defined by the annexed claims and disclosed in the following description.

Further characteristics and advantages will become more apparent from the description of some preferred but not exclusive embodiments according to the present invention, illustrated only by way of non-limiting examples with the aid of the accompanying drawings, wherein:
- figure 1 illustrates, through diagram blocks, a first exemplary forecasting method according to the present invention;
- figure 2 illustrates, through diagram blocks, a second exemplary forecasting method according to the present invention;
- figure 3 illustrates, through diagram blocks, a sequence of steps carried out by performing modelling techniques according to the method of the present invention;
- figures 4-8 are plots illustrating the collected measurements of the power generated by a solar inverter and forecasting models determined according to the execution of the method according to the present invention;
- figure 9 schematically illustrates, through diagram blocks, an inverter comprising means suitable for carrying out the method according to the present invention; and
- figure 10 schematically illustrates, through diagram blocks, a solar power generation system according to the present invention.

It should be noted that in the detailed description that follows, identical or similar method steps, elements or components, either from a structural and/or functional point of view, can have the same reference numerals, regardless of whether they are shown in different embodiments of the present disclosure.

It should also be noted that in order to clearly and concisely describe the present disclosure, the drawings may not necessarily be to scale and certain features of the disclosure may be shown in somewhat schematic form.

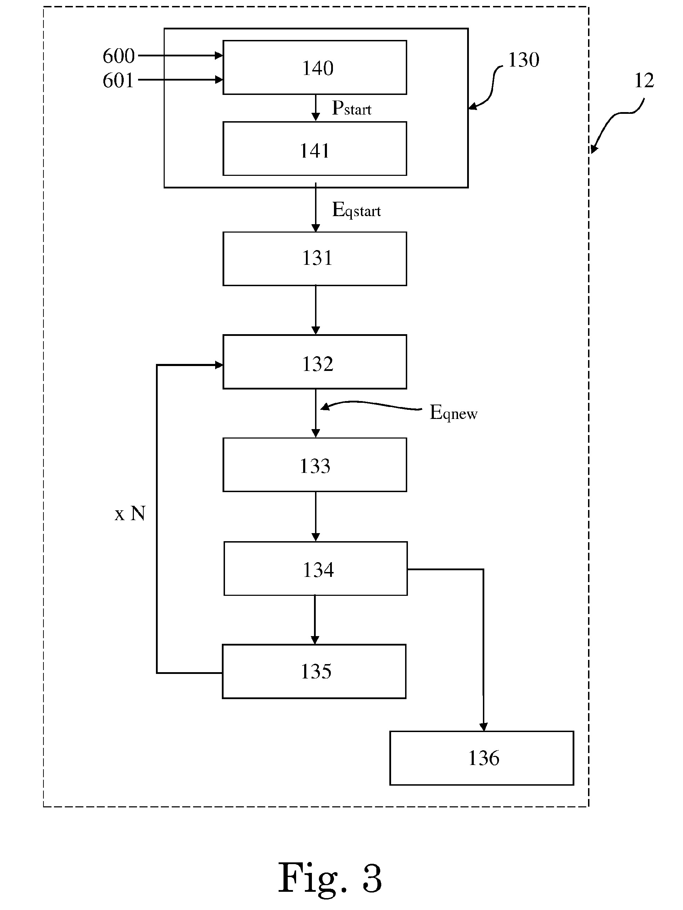

The present invention is related to a method 10 for forecasting the power generable by a solar inverter 1 its daily operation. Hereinafter, the day in which the generable power is under forecasting will be indicated as "current day" and indicated in figures 3-7 with reference "D₁".

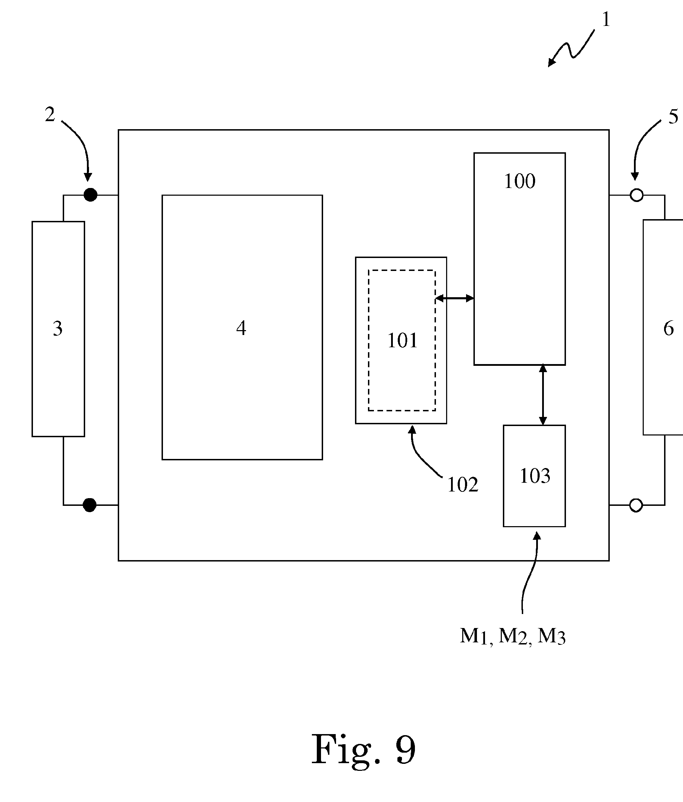

With reference to the exemplary embodiment illustrated in figure 9, the inverter 1 comprises: input terminals 2 adapted to be connected to one or more solar panels 3 producing DC power; power electronic conversion means 4 adapted to convert the DC power received from the one or more solar panels 3 into AC power; and output terminals 5 which can provide the converted AC power to one or more AC grids or loads 6.

Since the functioning and structure of an inverter 1 for converting DC input power in AC output power is readily available to a person skilled in the art and it is not relevant for the scope and understanding of the present invention, it will not be further described in particular details.

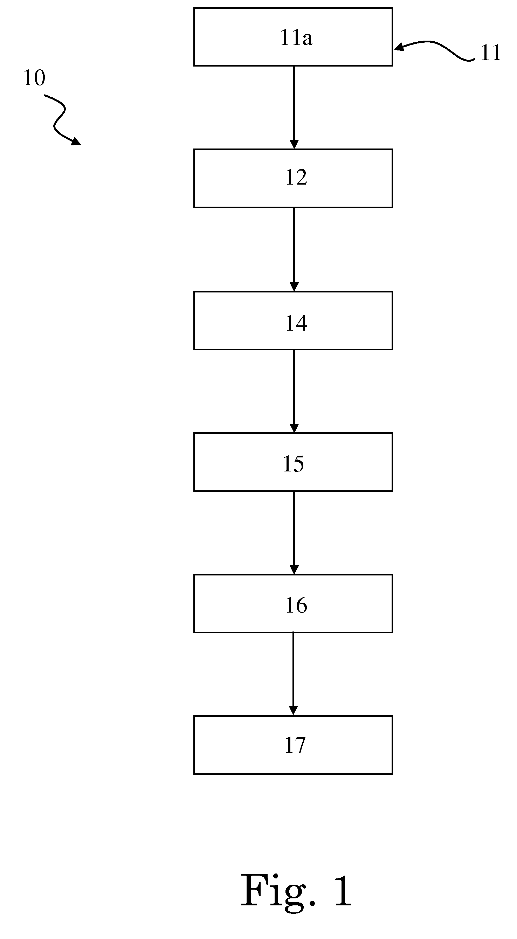

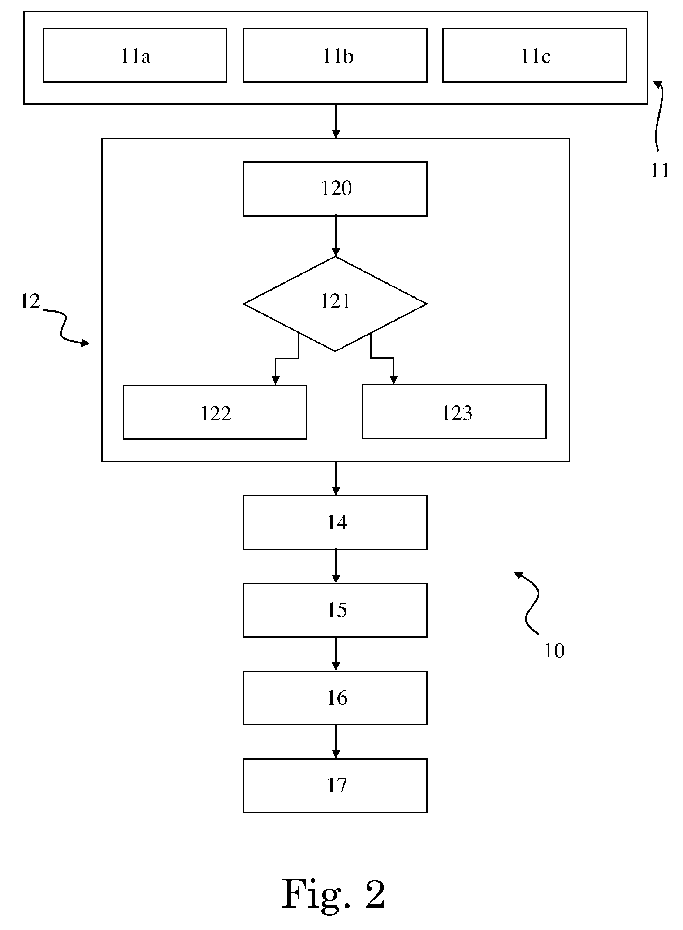

With reference to figures 1 and 2, the forecasting method 10 according to the present invention comprises the step 11 of collecting at least sunrise measurements M₁ related to the power generated by the inverter 1 during at least a starting period Tₛ of the sunrise of one or more days including the current day D₁.

These collected measurements M₁ are hereinafter indicated as "sunrise measurements M₁" for sake of simplicity.

Preferably, the sumise measurements M₁ of step 11 are collected during the starting period of the sunrise, for example during one or more first tens of seconds of the day D₁. Alternatively, the sunrise measurements M₁ can be collected for a longer period of the sunrise, even during all the duration of the sunrise (e.g. some minutes).

The forecasting method 10 further comprises the step 12 of performing modelling techniques based on the sunrise measurements M₁ of at least one of the days at which the sunrise measurements M₁ themselves are collected at method step 11.

The modelling techniques are performed for determining a forecasting model 200 which fits the measurements M₁ collected during the sunrise and predicts the power generable by the inverter 1 during the rest of the current day D₁.

According to a first exemplary embodiment of the method 10, as illustrated in figure 1, the step 12 comprises performing the modelling techniques directly on the sunrise measurements M₁ of the current day D₁.

Preferably, according to such first exemplary method 10, the step 11 only comprises the step 11a of collecting the sunrise measurements M₁ of the current day D₁, because they are the only measurements on which the modelling techniques are performed at step 13 for determining the forecasting model 200.

According to a second exemplary embodiment of the method 10, as illustrated in figure 2, the step 11 comprises, in addition to a step 11a of collecting the sunrise measurements M₁ of the current day D₁, the step 11b of collecting the sunrise measurements M₁ of at least one previous day D₂ preceding the current day D₁ itself.

The method step 12 comprises:
- the step 120 of performing the modelling techniques based at least on the sunrise measurements M₁ of the previous day D₂, in such a way to determine a candidate model 201 of the power generable by the inverter 1 during the current day D₁;
- the step 121 of comparing, e.g. through correlation techniques, the candidate model 201 to the sunrise measurements M₁ of the current day D₁, in order to determine if the candidate model 201 fits the sunrise measurements M₁ of the current day D₁.

If the candidate model 201 fits the sunrise measurements M₁ of the current day D₁, the method 10 proceeds with step 122 of validating the candidate model 201 as the forecasting model 200.

If the candidate model 201 does not fit the sunrise measurements M₁ of the current day D₁, the method 10 proceeds with step 123 of performing the modelling techniques directly on the sunrise measurements M₁ of the current day D₁ for determining the forecasting model 200.

Preferably, the step 121 comprises comparing an error resulting from the comparison between the candidate model 201 and the sunrise measurements M₁ of the current day D₁ with a predetermined threshold.

If such an error remains below the predetermined threshold, the candidate model 201 is determined to fit the sunrise measurements M₁ of the current day D₁. If such an error exceeds the predetermined threshold, the candidate model 201 is determined as not fitting the sunrise measurements M₁ of the current day D₁.

It is to be understood that comparing an error with a predetermined threshold is only one, not limiting, example of predetermined criteria suitable for determining if the candidate model 201 fits the sunrise measurements M₁ of the current day D₁.

Preferably, with reference to figure 2, the step 11 of the method 10 according to the second exemplary embodiment also comprises the step 11c of collecting further measurements M₂ related to the power generated by the inverter 1 during the rest of the previous day D₂, after the collection of the sunrise measurements M₁ of the previous day D₂ itself.

Accordingly, the step 120 advantageously comprises performing the modelling techniques based on the further measurements M₂ in addition to the sunrise measurements M₁ of the previous day D₂, in order to generate the candidate model 201.

In this way, the validated candidate model 201 has an improved accuracy in predicting the values of the power generable by the inverter 1 after the collection of the sunrise measurements M₁ of the current day D₁, since the candidate model 201 is determined considering the measurements M₁, M₂ covering all the duration of the previous day D₂.

As disclosed above, the step 12 of the method 10 according to the present invention comprises performing modelling techniques on relevant collected measurements of the power generated by the inverter 1, in order to determine a model of the power generable by the inverter 1.

In particular, according to the execution of step 12 of the first exemplary method 10 illustrated in figure 1, the relevant collected measurements are the sunrise measurements M₁ of the current day D₁, and the model determined through the modelling techniques is directly the forecasting model 200.

According to the execution of step 120 of the second exemplary method 10 illustrated in figure 2, the relevant collected measurements are the sunrise measurements M₁ of the previous day D₂ and, preferably the further measurements M₂ of the same day D₂, and the model determined through the modelling techniques is the candidate model 201.

According to the execution of method step 123, the relevant collected measurements are the sunrise measurements M₁ of the current day D₁, and the model determined through the modelling techniques is directly the forecasting model 200.

In all the above exemplary cases, determining a model 200, 201 through modelling techniques means determine parameters of a model equation, e.g. a polynomial.

The modelling techniques preferably comprise machine learning techniques, and more preferably supervised machine learning techniques, e.g. Support Vector Machine (SVM) techniques. According to these modelling techniques, coefficients and degrees of model equations are selected by using, as training input data, the relevant collected measurements on which the techniques are based according to the execution of method step 12.

For example, the model equations are generated by selecting their coefficients and/or degrees in view of the fitting with the relevant collected measurements and/or in view of the accuracy of prediction of feature power generable values. Few collected measurements, especially the last collected measurements, can be not used for generating the model equations, but for testing the capability of predication of the model equations generated basing on all the other measurements. Alternatively or in addition to the learning machine techniques, the modelling techniques can comprise predictive analysis techniques or curve fitting techniques, e.g. regression techniques, in which coefficients of one or more selected model equations are found in order to minimize the error with respect to the relevant collected measurements M₁, M₂ on which the techniques are based according to the execution of method step 12.

Preferably, the modelling techniques comprises a genetic model evolving algorithm.

More preferably, this genetic model evolving algorithm comprises the execution of the above mentioned learning machine techniques, especially SVM techniques, or alternatively of the curve fitting or predictive analysis techniques.

For example, a genetic model evolving algorithm is illustrated in figure 3 and it comprises:
- a step 130 of determining, e.g. through the machine learning techniques, a plurality of starting model equations Eqₛₜₐᵣₜ;
- a step 131 of classifying the starting model equations Eqₛₜₐᵣₜ in view of their fitting with the relevant collected measurements;
- a step 132 of perturbing, e.g. randomly, one or more parameters of the starting model equations Eqₛₜₐᵣₜ for generating a number of new model equations Eq_{new}, this number depending on the classification position of each model equation (for example, a large number of new model equations is set for the model equations classified at the highest positions, while few or zero new model equations are set for the model equations at the lowest positions);
- a step 133 of varying, e.g. through the machine learning techniques, the parameters of the new model equations Eq_{new} in view of the relevant collected measurements, e.g. for minimizing the error between the new model equations Eq_{new} and the relevant collected measurements; and
- after the execution of step 133, a step 134 of re-classifying the starting model equations Eqₛₜₐᵣₜ and the new model equations Eq_{new} in view of their fitting with the relevant collected measurements;
- a step 135 of considering the model equations Eqₛₜₐᵣₜ, Eq_{new} classified at step 134 as new starting model equations for repeating steps 132-135; and
- a step 136 of selecting the model equation classified as the model equation which best fits the relevant collected measurements, after the repetition of steps 131-134 for a predetermined number N of times.

Preferably, step 130 comprises at the beginning the step 140 of generating initial parameters Pₛₜₐᵣₜ of the starting model equations Eqₛₜₐᵣₜ. Further, step 130 comprises the step 141 of varying, e.g. through learning machine techniques, the initial parameters Pₛₜₐᵣₜ in view of the relevant acquired measurements, e.g. for minimizing the error between the starting model equations Eqₛₜₐᵣₜ and the relevant collected measurements.

More preferably, the step 140 comprises using astronomical information 600 and/or information 601 of the installation site of the inverter 1 (e.g. longitude, latitude), in order to establish initial parameters Pₛₜₐᵣₜ which are good starting point for varying the starting model equations Eqₛₜₐᵣₜ in view of the relevant collected measurements.

With reference to the exemplary embodiments illustrated in figures 1 and 2, the method 10 preferably further comprises the step 14 of collecting further measurements M₃ related to the power generated by the inverter 1 during the rest of the current day D₁, after the collection of the sunrise measurements M₁ of the current day D₁ itself.

According to the exemplary embodiments illustrated in figures 1 and 2, the method 10 further comprises the step 15 of evolving the forecasting model 200 determined at step 12 in order to fit the further measurements M₃.

In this way, the progressively incoming further measurements M₃ are used to correct the forecasting model 200, in order to predict with better accuracy the power generable by the inverter 1 in the rest part of the current day D₁.

Preferably, the step 15 comprises evolving the forecasting model 200 by using a genetic model evolving algorithm as the above disclosed genetic evolving algorithm executed at method step 12. In this case, the relevant collected measurements, on which the genetic model evolving algorithm is performed to evolve the forecasting model 200 at a certain moment, comprise the sunrise measurements M₁ and the further measurements M₃ collected till such certain moment. Alternatively, step 15 can comprise determining the new model 202 through modelling techniques without a genetic model evolving approach, such as by executing curve fitting, predictive analysis or machine learning techniques, especially SVM techniques, without perturbation of the parameters and reclassification of the resulting model equations.

According to the exemplary embodiments illustrated in figures 1 and 2, the method 10 further comprises the step 16 of determining an error between the forecasting model 200 and the further measurements M₃.

Preferably, as illustrated in the exemplary embodiments of figures 1 and 2, step 16 is executed successively to the execution of step 15, i.e. the error is calculated between the forecasting model 200 as evolved by the execution of step 15 and the further measurements M₃ used for its evolution. Alternatively, in the case that method 10 does not comprise the step 15, the error is calculated between the forecasting model 200 as generated at step 12 and the further, progressively incoming, measurements M₃.

If the error exceeds a predetermined threshold, the method 10 further comprises the steps 17 and 18 of:
- performing modelling techniques based at least on the further measurements M₃, for determining a new model 202 which fits the further measurements M₃ and which predicts the power generable by the inverter 1 during the rest of the current day D₁; and
- replacing the forecasting model 200 with the new model 202.

Preferably, the execution of the modelling techniques at step 17 comprises generating a plurality of initial model equations basing on the measurements M₁, M₂ of the power generated by the inverter during the previous day D₂.

In this way, if the error determined at step 16 is due to unexpected situations, the plurality of initial model equations based on measurements M₂ could be good starting point for fitting the further measurements M₃ of the current day D₁ (at least if the same unexpected situations occurred in the previous day D₂).

Preferably, step 17 comprises determining the new model 202 by using a genetic model evolving algorithm as the above disclosed genetic evolving algorithm executed at method step 12.

In this case, the relevant collected measurements, on which the genetic model evolving algorithm is performed to determine the model 202, comprise the sunrise measurements M₁ and the further measurements M₃.

With reference to figure 3, the step 140 of generating initial parameters Pₛₜₐᵣₜ of the starting model equations Eqₛₜₐᵣₜ preferably comprises using the measurements M₂ of the previous day D₂. Alternatively, step 17 can comprise determining the new model 202 without genetic model evolving algorithms, e.g. by curve fitting, predictive analysis or machine learning techniques, especially SVM techniques.

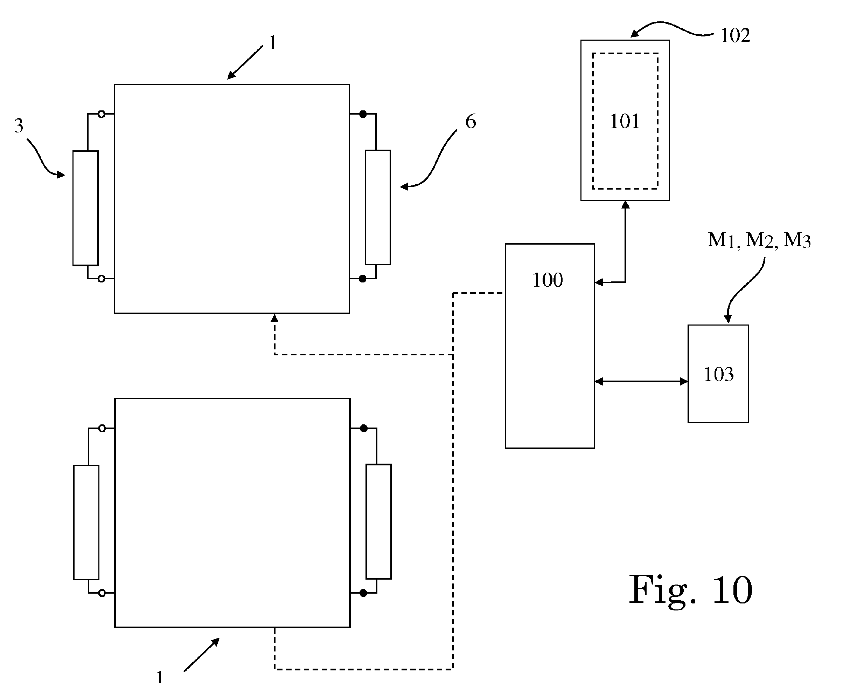

Another aspect to the present disclosure is to provide a power generation system 300 comprising one or more inverters 1, processing means 100 and program code (schematically illustrated in figure 10 by a dotted block 101) which can be executed by the processing means 100.

The program code 101 is adapted, when executed by the processing means 100, to cause an execution of the method 10 according to the above disclosure.

With reference to figure 9, the inverters 1 themselves of the system 300 can have therein the processing means 100 and the executable program code 101.

For example, the inverter 1 illustrated in figure 9 comprises: storing means 102 which are suitable for storing the program code 101 and which are accessible by the processing means 100, and collecting means 103 which are suitable for collecting the measurements M₁, M₂, M₃ required for the execution of method 10.

In the exemplary embodiment illustrated in figure 10, the power generation system 300 comprises processing means 100 and related executable code 101 outside two respective exemplary inverters 1.

In particular, the system 300 comprises at least storing means 102 which are suitable for storing the program code 101 and which are accessible by the processing means 100, and collecting means 103 which are suitable for collecting the measurements M₁, M₂, M₃ required during the execution of method 10. For example, the processing means 100 and related executable code 101 can be located in remote central control means, such as a personal computer or Web server, or in meters located near or remote with respect to the corresponding inverters 1.

In the exemplary embodiments of figures 9 and 10 the collecting means 103 can be suitable for keeping stored therein, during the current day D₁, the measurements M₁, M₂ acquired during at least one previous day D₂. In this case, it is advantageous that the program code 101 is suitable for executing the method 10 according to the above disclosed secondary embodiment, e.g. the exemplary method 10 illustrated in figure 2.

In case that the collecting means 103 are not suitable for keeping stored therein, during the current day D₁, the measurement M₁, M₂ of at least one previous day D₂, the program code 101 is accordingly adapted to execute the method 10 according to the above disclosed first embodiment, e.g. the exemplary method 10 illustrated in figure 1.

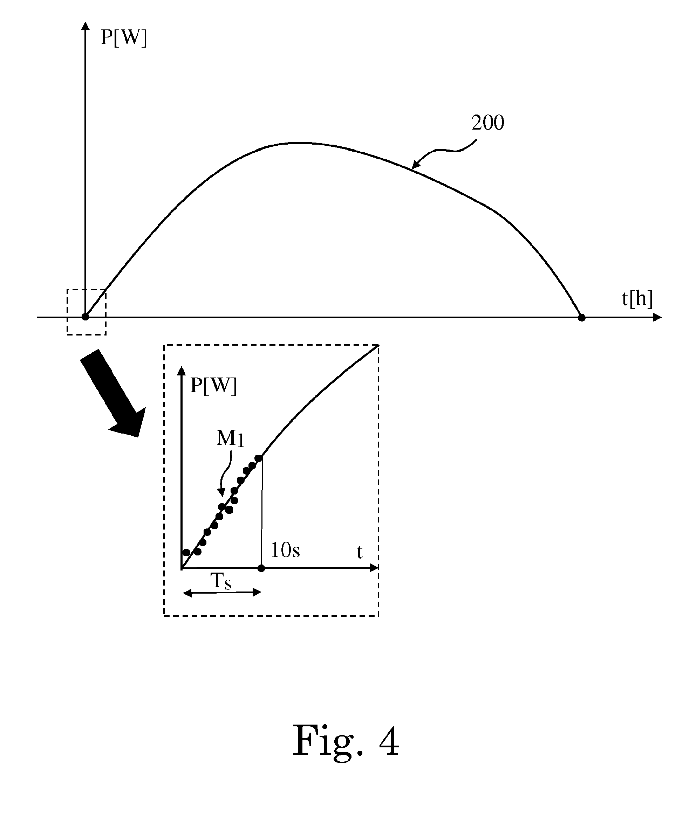

An execution of the method 10 according to the exemplary embodiments illustrated in figures 1 and 2 is disclosed in the followings, by making particular reference to figures 4-8 and the exemplary embodiments of inverter 1 and power generation system 300 of figures 9-10.

The sunrise measurements M₁ are collected, through the collecting means 103, during the starting period Tₛ of the sunrise of the current day D₁ (method step 11). For example, the starting period Tₛ illustrated in figures 3-8 has a duration of about 10s.

Especially in the case that the collecting means 103 are not suitable for keeping stored therein, during the current day D₁, the measurement M₁, M₂ of the previous day D₂, the program code 101 run by the processing means 100 causes the execution of step 12 of the method 10 illustrated in figure 1. According to this execution, the modelling techniques are directly performed on the sunrise measurements M₁ of the current day D₁ for determining the forecasting model 200, as illustrated for example in figure 4.

For example, the execution of the method step 12 by the processing means 100 comprises the execution by the processing means 100 of a genetic model evolving algorithm as the exemplary algorithm illustrated in figure 3, in order to determine the forecasting model 200 illustrated in figure 3.

In particular, the execution of such algorithm comprises:
- generating initial parameters Pₛₜₐᵣₜ of a plurality of starting model equations Eqₛₜₐᵣₜ (step 140);
- varying the initial parameters Pₛₜₐᵣₜ for fitting the sunrise measurements M₁ of the current day D₁, preferably through learning machine techniques, more preferably through SVM techniques (step 141);
- classifying the starting model equations Eqₛₜₐᵣₜ in view of their fitting with the sunrise measurements M₁ of the current day D₁ (step 131);
- perturbing parameters of the starting model equations Eqₛₜₐᵣₜ for generating new model equations Eq_{new}, the number of new model equations depending on the classification position of each model equation (step 132);
- varying the parameters of the new model equations Eq_{new} for fitting the sunrise measurements M₁ of the current day D₁, preferably through learning machine techniques, more preferably SVM techniques (step 133);
- re-classifying the starting model equations Eqₛₜₐᵣₜ and the new model equations Eq_{new} in view of their fitting with the sunrise measurements M₁ of the current day D₁ (step 134);
- considering the model equations Eqₛₜₐᵣₜ, Eq_{new} classified at step 134 as new starting model equations for repeating steps 132-135; and
- selecting the model equation classified as the model equation which best fits the relevant collected measurements (step 136), after the repetition of steps 131-134 for a predetermined number N of times.

Especially in the case that the collecting means 103 are suitable for keeping stored therein, during the current day D₁, the measurements M₁, M₂ of the previous day D₂, the execution of method 11 also causes the collection, through the collecting means 103, of the sunrise measurements M₁ of the power generated by the inverter 1 during the previous day D₂ (step 11b).

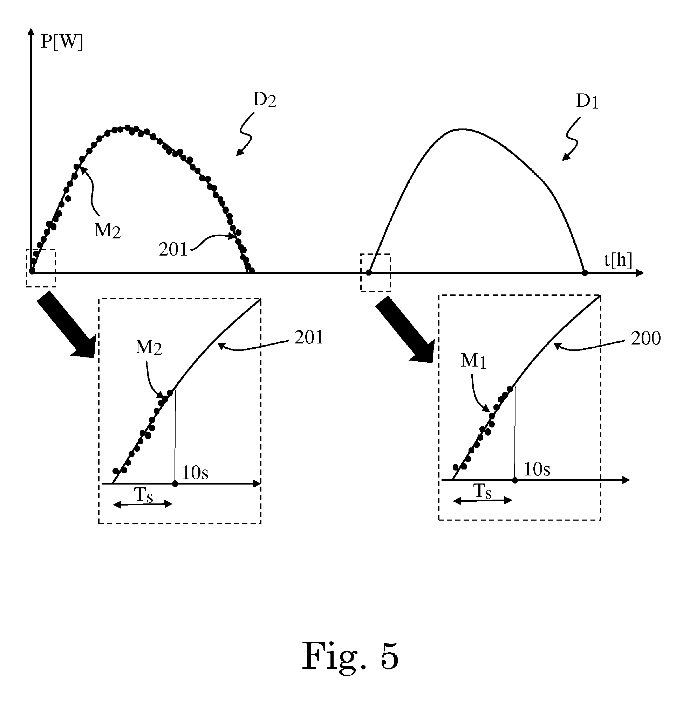

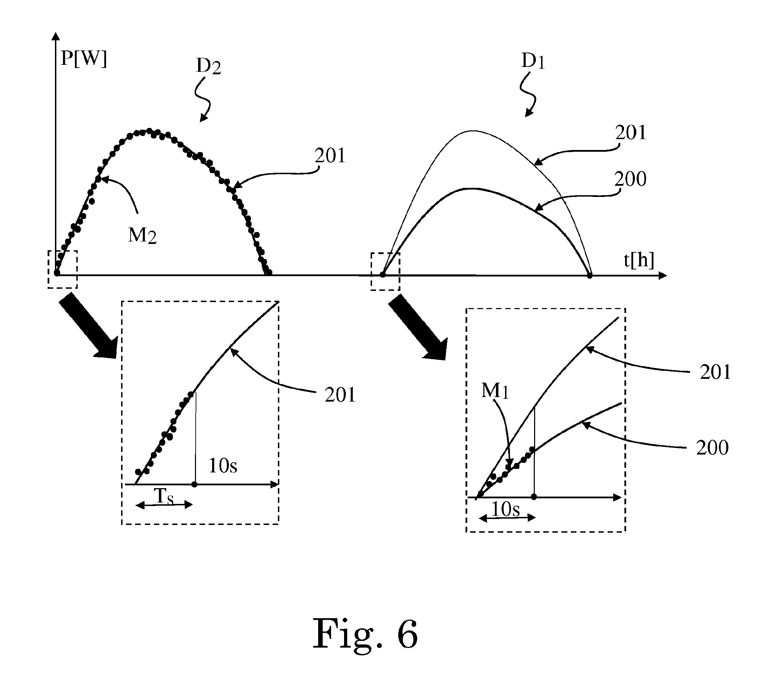

Preferably, as illustrated in the example of figures 5 and 6, the execution of method 11 also causes the collection, through the collecting means 103, of the further measurements M₂ of the power generated by the inverter 1 during the previous day D₂ (step 11c).

With reference to figures 5 and 6, the program code 101 run by the processing means 100 causes an execution of step 12 of the method 10 illustrated in figure 11.

According to this execution:
- modelling techniques are performed based on the collected measurements M₁ and M₂ of the previous day D₂, in such a way to determine the candidate model 201 (step 120);
- the candidate model 201 is compared to the sunrise measurements M₁ of the current day D₁, in order to determine if it fits the sunrise measurements M₁ of the current day D₁.

Considering the example illustrated in figure 5, the sunrise measurements M₁ of the current and previous days D₁, D₂ are similar; hence, in this case the candidate model 201 is determined to fit the sunrise measurements M₁ of the current day D₁ and it is validated to be the forecasting model 200 (step 122).

In practice, the model 201 is recognized as a candidate suitable for forecasting accurately the power generable by the solar inverter 1 during the rest of the current day D₁, because it is built on the measurements M₁, M₂ of the previous day D₂ which starts similarly and, hence, should have a behavior similar to the rest of the current day D₁.

For example, the execution of the method step 12 by the processing means 100 comprises the execution by the processing means 100 of a genetic model evolving algorithm as the exemplary algorithm illustrated in figure 3, in order to determine the candidate model 201 illustrated in figures 5 and 6.

In particular, the execution of such algorithm comprises:
- generating initial parameters Pₛₜₐᵣₜ of a plurality of starting model equations Eqₛₜₐᵣₜ (step 140);
- varying the initial parameters Pₛₜₐᵣₜ for fitting the measurements M₁ and M₂ of the previous day D₂, preferably through learning machine techniques, more preferably SVM techniques (step 141);
- classifying the starting model equations Eqₛₜₐᵣₜ in view of their fitting with the measurements M₁ and M₂ of the previous day D₂ (step 131);
- perturbing parameters of the starting model equations Eqₛₜₐᵣₜ for generating new model equations Eq_{new}, the number of new model equations depending on the classification position of each model equation (step 132);
- varying the parameters of the new model equations Eq_{new} for fitting the measurements M₁ and M₂ of the previous day D₂, preferably through learning machine techniques, more preferably SVM techniques (step 133);
- re-classifying the starting model equations Eqₛₜₐᵣₜ and the new model equations Eq_{new} in view of their fitting with the measurements M₁ and M₂ of the previous day D2 (step 134);
- considering the model equations Eqₛₜₐᵣₜ, Eq_{new} classified at step 134 as new starting model equations for repeating steps 132-135; and
- selecting the model equation classified as the model equation which best fits the relevant collected measurements (step 136), after the repetition of steps 131-134 for a predetermined number N of times.

Considering the example illustrated in figure 6, the sunrise measurements M₁ of the current and previous days D₁, D₂ are very different, meaning that the two days D₁, D₂ start with different weather conditions and probably current day D₁ will continues differently with respect previous day D₂.

In this case, the candidate model 201 does not fit the sumise measurements M₁ of the current day D₁. In practice, the model 201 is not recognized as a candidate suitable for forecasting accurately the power generable by the solar inverter 1 during the rest of the current day D₁, because it is built on the measurements M₁, M₂ of the previous day D₂ which starts with different weather conditions with respect to the current day D₁.

Therefore, the execution of the method 10 by the processing means 100 continues by performing the modelling techniques directly on the sunrise measurements M₁ of the current day D₁ for determining the forecasting model 200 (step 123).

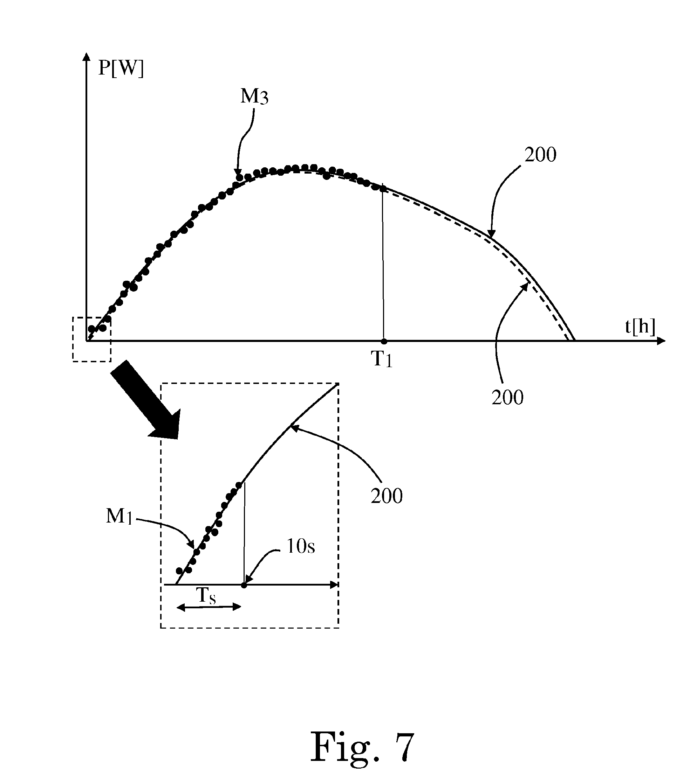

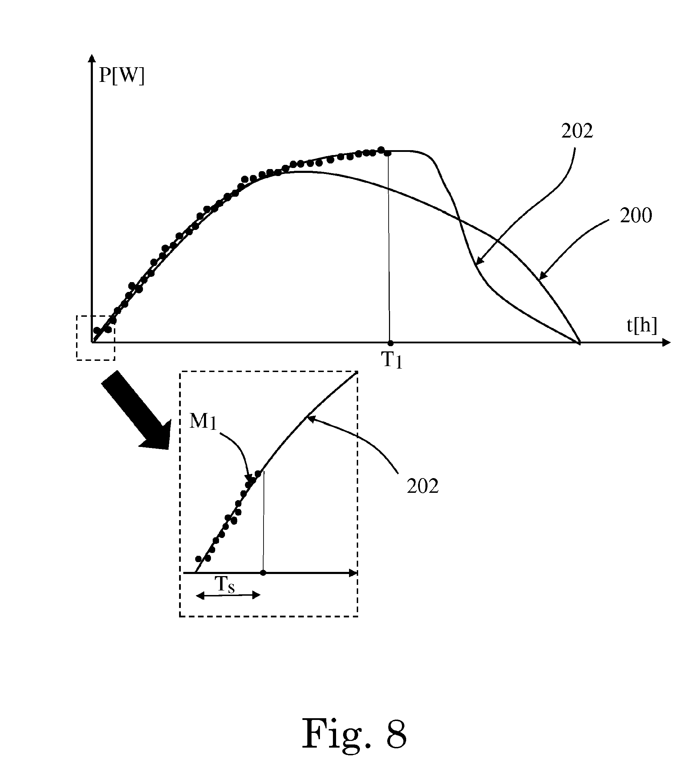

With reference to figures 7-8, after the collection of the sunrise measurements M₁ of the current day D₁ at step 11 and the determination of the forecasting model 200 at step 12, the method 10 preferably proceeds with the collection, through the collecting means 103, of the further measurements M₃ during the rest of the current day D₁ (step 14). For example, figures 7 and 8 illustrate the situation at a time T₁ of the current day D₁, where a set of measurements M₃ has been progressively collected after the starting period Tₛ of the sumise, till time Ti.

Even not illustrated in figures 7-8, measurements M₃ are progressively further collected after the instant T₁, during the rest of the current day D₁.

With reference to figure 7, the method 10 proceeds, according to the execution of the code 101 through processing means 100, by evolving the forecasting model 200 determined at step 12 in such a way to fit the further measurements M₃ (step 15).

In practice, the forecasting model 200 is progressively evolved following the progressively incoming of the measurements M₃.

For example, in figure 7 there is illustrated by dot lines the forecasting model 200 as determined at step 12 of the method 10 and the forecasting model 200 as corrected to fit the measurements M₃ collected till time Ti.

Preferably, the illustrated evolved forecasting model 200 is the result of the execution of a genetic model algorithm starting from the forecasting model 200 determined upon the execution of method step 12; such execution being based on the sunrise measurements M₁ and the further measurements M₃ collected till time T₁.

In figure 8, the measurements M₃ illustrate an unexpected behavior in the power generation of the inverter 1, which can be due for example to a cloud. When the error between the model 200 and measurements M₃ becomes too high, even the evolution of the model 200 according to method step 15 could fail.

Hence, according to the execution of the code 101 by the processing means 100, the error is determined (step 16) and, when it exceeds a predetermined threshold, modelling techniques are performed based at least on the measurements M₃, for determining a new model 202 which fits the measurements M₃ resulting from the unexpected situation (step 17).

The new model 202 replaces the forecasting model 200 (step 18).

Preferably, the illustrated model 202 is the result of the execution of a genetic model algorithm starting from the forecasting model 200 or from the model 201 based on the measurements M₁, M₂ of the previous day D₂ (if the collecting means 103 are suitable for keeping these measurements M₁, M₂ during the current day D₁). The genetic model algorithm is based on the sunrise measurements M₁ and the further measurements M₃ collected till time T₁.

In practice, it has been seen how the forecasting method 10 and related inverter 1 and power generation system 300 allow achieving the intended object offering some improvements over known solutions.

In particular, the method 10 allows a simple and accurate forecasting calculation, focused on the sunrise measurements M₁ of the current day D₁ which provide value information of how the power generable by the inverter 1 during the rest of day D₁ should be.

According to the first exemplary embodiment illustrated in figure 1, the forecasting model 200 is directly determined at method step 12 through the execution of modelling techniques on the sunrise measurements M₁ of the current day D₁.

According to the second exemplary embodiment illustrated in figure 2, the sunrise measurements M₁ of the current day D₁ are used to validate the candidate model 201 fitting the measurements M₁, and preferably M₂, of the previous day D₂.

If the candidate model 201 is assessed to fit the sunrise measurements M₁ of the current day D₁, the forecasting model 200 of the current day D1 is determined to be the candidate model 201.

If the candidate model 201 is assessed to not fit the sunrise measurements M₁ of the current day D₁, the forecasting model 200 is directly determined by performing the modelling techniques on the sunrise measurements M₁ of the current day D₁.

In practice, the measurements M₁, M₂ of the previous day D₂ are used in the forecasting of the power generable by the inverter 1 in the current day D₁ if a similarity between the sunrise measurements M₁ of the previous and current days D₁, D₂ occurs.

Since the forecasting method 10 is focused on the sunrise measurements M₁ of the current day D₁, it does not jeopardize the accuracy of the prediction when the current day D₁ starts with a very different weather behavior with respect to the previous days D₂.

The method 10 thus conceived, and related inverter 1 and power generation system 300, are also susceptible of modifications and variations, all of which are within the scope of the inventive concept as defined in particular by the appended claims.

For example, the collected measurements M₁, M₂, M₃ can be directly measurements of the generated power (as illustrated for example in figures 3-8), or they can be measurements of other electrical quantities indicative of the generated power, such the energy and/or current and/or voltage generated in output by the solar inverter 1. Further, the measurements M₁, M₂, M₃ can be measured and collected through any suitable means readily available for a skilled in the art for such purposes, such as through sensors, expansion boards, data loggers, meters, et cetera. For example, the term "processing means" can comprise microprocessors, digital signal processors, micro-computers, mini-computers, optical computers, complex instruction set computers, application specific integrated circuits, a reduced instruction set computers, analog computers, digital computers, solid-state computers, single-board computers, or a combination of any of these. For example, even if in the exemplary embodiments illustrated in figures 9 and 10 the processing means 100, the storing means 102 and the collecting means 103 are illustrated as separated blocks operatively connected to each other, all these elements or a part thereof can be integrated in a single electronic unit or circuit, such as in the processing means 100 themselves.

## Claims

1. A method (10) for forecasting the power generable by a solar inverter (1) during a current day (D₁), **characterized in that** it comprises:
a) collecting (11) at least sunrise measurements (M₁) related to the power generated by the solar inverter (1) during at least a staring period (Tₛ) of the sunrise of one or more days (D₁, D₂) comprising the current day (D₁); and
b) performing (12) modelling techniques based on the sunrise measurements (M₁) of at least one of said one or more days (D₁, D₂), for determining a forecasting model (200) which fits the sunrise measurements (M₁) and predicts the power generable by the solar inverter (1) during the rest of the current day (D₁).

2. The method (10) according to claim 1, wherein said step b) comprises performing the modelling techniques on the sunrise measurements (M₁) of the current day (D₁).

3. The method (10) according to claim 1, wherein:
- said step a) comprises collecting (11b) sunrise measurements (M₁) of at least one previous day (D₂) preceding the current day (D₁); and
- said step b) comprises:
b₁) performing (120) the modelling techniques based at least on the sunrise measurements (M₁) of the previous day (D₂), in such a way to determine a candidate model (201) of the power generable by the solar inverter (1) during the current day (D₁);
b₂) comparing (121) said candidate model (201) to the sunrise measurements (M₁) of the current day (D₁) in order to determine if the candidate model (201) fits the sunrise measurements (M₁) of the current day (D₁);
b₃) if the candidate model (201) fits the sunrise measurements (M₁) of the current day (D₁), validating (122) the candidate model (201) as the forecasting model (200);
b₄) if the candidate model (201) does not fit the sunrise measurements (M₁) of the current day (D₁), performing (123) the modelling techniques on the sunrise measurements (M₁) of the current day (D₁) for determining said forecasting model (200).

4. The method (10) according to claim 3, wherein:
- said step a) comprises collecting (11c) further measurements (M₂) related to the power generated by the inverter (1) during the previous day (D₂) after the collection of the sunrise measurements (M₁); and
- said step b₁) comprises performing (120) the modelling techniques basing also on said further measurements (M₂).

5. The method (10) according to one or more of the preceding claims, wherein the modelling techniques comprise machine learning techniques.

6. The method (10) according to claim 5, wherein said machine learning techniques comprise Support Vector Machine (SVM) techniques.

7. The method (10) according to one or more of the preceding claims, wherein the execution of said modelling techniques at said method step b) comprises:
c₁) determining (130) a plurality of starting model equations (Eqₛₜₐᵣₜ).

8. The method (10) according to one or more of the preceding claims, wherein the modelling techniques comprises genetic model evolving algorithm.

9. The method (10) according to claims 7 and 8, wherein, according to the execution of said model evolving algorithm, said method step b) comprises:
c₂) classifying (131) the starting model equations (Eqₛₜₐᵣₜ) in view of their fitting with the collected measurements (M₁, M₂) of the power generated by the solar inverter (1) on which the modelling techniques are performed;
c₃) perturbing (132) one or more parameters of the starting model equations (Eqₛₜₐᵣₜ) for generating a number of new model equations (Eq_{new}), said number depending on the classification position of each model equation;
c₄) varying (133) the parameters of the new model equations in view of the collected measurements (M₁, M₂) of the power generated by the solar inverter (1) on which the modelling techniques are performed;
c₅) after the execution of step c₄, re-classifying (134) the starting model equations (Eqₛₜₐᵣₜ) and the new model equations (Eq_{new}) in view of their fitting with the collected measurements (M₁, M₂) of the power generated by the solar inverter (1) on which the modelling techniques are performed;
c₆) considering (135) the model equations (Eqₛₜₐᵣ, Eq_{new}) classified at step c₅ as new starting model equations for repeating step c₃; and
c₇) after a repetition of steps c₃-c₆ for a predetermined number (N) of times, selecting (136) the model equation classified as the model equation which best fits the collected measurements (M₁, M₂) of the power generated by the solar inverter (1) on which the modelling techniques are performed.

10. The method (10) according to one or more of claims 7-9, wherein said step c₁ comprises:
- generating (140) initial parameters (Pₛₜₐᵣₜ) of the starting model equations (Eqₛₜₐᵣₜ);
- varying (141) the initial parameters (Pₛₜₐᵣₜ) in view of collected measurements (M₁, M₂) of the power generated by the inverter on which the modelling techniques are performed; wherein said generating initial parameters of the starting model equations comprise using astronomical information (600) and/or information of the installation site (601) of the solar inverter (1).

11. The method (10) according to one or more of the preceding claims, further comprising:
d) collecting further measurements (M₃) of the power generated by the solar inverter (1) during the current day (D₁), after the collection of the sunrise measurements (M₁) of the current day (D₁).

12. The method (10) according to claim 11, wherein said method (10) comprises:
e) evolving (14) the forecasting model (200) determined at method step b) in such a way to fit said further measurements (M₃) of the power generated by the solar inverter (1) during the current day (D₁).

13. The method (10) according to claim 11 or claim 12, comprising:
f) determining (15) an error between the forecasting model (200) and said further measurements (M₃) of the power generated by the solar inverter (1) during the current day (D₁);
g) if said error exceeds a predetermined threshold, performing (16) modelling techniques based at least on said further measurements (M₃) collected at method step d, for determining a new model (202) which fits said further measurements (M₃) and which predicts the power generable by the solar inverter (1) during the rest of the current day (D₁);
h) replacing (17) said forecasting model (200) with said new model (202).

14. The method (10) according to claim 13, wherein it comprises, according to the execution of said the modelling techniques at said step g), generating a plurality of initial model equations basing on the measurements (M₁, M₂) of the power generated by the solar inverter (1) during at least one of the days (D₂) preceding the current day (D₁).

15. A solar invert (1) comprising processing means (100) and program code (101) which can be executed by said processing means, **characterized in that** said program code is adapted, when executed by said processing means, to cause an execution of the method (10) according to one or more of claims 1-15.

16. A power generation system (300) comprising at least one solar inverter (1), processing means (100) and program code (101) which can be executed by said processing means, **characterized in that** said program code is adapted, when executed by said processing means, to cause an execution of the method (10) according to one or more of claims 1-15.
